# EUROPÄISCHE PATENTSCHRIFT

(11) **EP 0 630 908 B1**
(45) Veröffentlichungstag und Bekanntmachung des Hinweises auf die Patenterteilung: **03.09.1997**
(21) Anmeldenummer: 94108907.0
(22) Anmeldetag: 10.06.1994
(51) Int. Cl.: C08F 2/00, C08F 20/02, C08F 20/12

(54) **Verfahren zur Reduzierung des Wandbelages bei der Suspensionspolymerisation von Acryl- und/oder Methacrylgruppen-haltigen Monomeren**
Process for the reduction of scale in the suspensions polymerisation of acryl and/or methacryl groups containing monomers
Procédé de réduction de dépôts dans la polymérisation en suspension de monomères contenant des groupes acryloyl, et/ou méthacryloyl

(30) Priorität: 22.06.1993 DE 4320660
(43) Veröffentlichungstag der Anmeldung: 28.12.1994
(73) Patentinhaber: BASF Aktiengesellschaft, 67063 Ludwigshafen (DE)
(72) Erfinder: Deckers, Andreas, Dr., D-55234 Flomborn (DE); Schatz, Wolfgang, Dr., D-67061 Ludwigshafen (DE); Endlich, Karl-Ludwig, D-55120 Mainz (DE); Zimmer, Günther, Dr., D-55129 Mainz (DE)

(56) Entgegenhaltungen:
- US-A- 4 972 036
- CHEMICAL ABSTRACTS, vol. 91, no. 24, 10. Dezember 1979, Columbus, Ohio, US; abstract no. 194120, 'METHYL METHACRYLATE COPOLYMERS' Seite 33 ;Spalte 1 ;

## Beschreibung

Die vorliegende Erfindung betrifft ein verbessertes Verfahren zur Reduzierung des Wandbelages in Reaktionsbehältern bei der Suspensionspolymerisation von Acryl- und/oder Methacrylgruppen-haltigen Monomeren in an sich bekannter Weise.

Des weiteren betrifft die Erfindung die Verwendung eines Puffers und eines Dispergiermittels zur Reduzierung des Wandbelages in Reaktionsbehältern bei der Suspensionspolymerisation von Acryl- und/oder Methacrylgruppen-haltigen Monomeren.

Die Suspensionspolymerisation von vinylisch ungesättigten Monomeren ist ein bewährtes Verfahren zur Herstellung technisch relevanter Kunststoffe. Auf diese Weise werden in der Regel neben Polystyrol auch in großem Maße Polymethylmethacrylat (PMMA)-Formmassen produziert.

Wie bei allen Polymerisationen bildet sich im Verlauf der Reaktion im allgemeinen an den Reaktorwänden ein polymerer Belag, der einerseits den Wärmeübergang in das Temperiermedium (Heizen, Kühlen) verschlechtert und andererseits auch die Produkteigenschaften beeinflußt. Daher ist es notwendig, entweder die Belagsbildung zu unterdrücken oder den Belag häufig zu entfernen.

Bei stark wandhaftenden Polymermaterialien wie PMMA verwendet man häufig emaillierte Polymerisationskessel, die aufgrund ihrer glatten Oberfläche nur wenig Belag ansetzen. Die Emaille ist allerdings sehr stoß- und kratzempfindlich, so daß im Laufe der Zeit im Kessel sogenannte "blanke" Stellen entstehen, die wiederum Polymerbelag bilden. Daher wäre es von Vorteil, Kessel aus Edelstahl einzusetzen.

In der Praxis werden die Polymer-Beläge in Edelstahlkesseln z.B. durch eine Hochdruckwasserreinigung entfernt. Dies ist allerdings technisch sehr aufwendig und somit kostenintensiv.

Die Verwendung von Additiven während der Suspensionspolymerisation, z.B. Derivate des Phenols (EP 372 968), führt zwar zu einer Verminderung der Belagsbildung, doch sind die so erhältlichen Polymerisate verfärbt. Insbesondere für die Herstellung von transparenten Werkstoffen wie PMMA oder Polystyrol ist dieser Nachteil nicht tragbar.

Der Erfindung lag daher die Aufgabe zugrunde, ein verbessertes Verfahren zur Reduzierung des Wandbelags in Reaktionsbehältern bei der Suspensionspolymerisation von Acryl- und/oder Methacrylgruppen-haltigen Monomeren bereitzustellen.

Demgemäß wurde ein Verfahren zur Reduzierung des Wandbelages in Reaktionsbehältern bei der Suspensionspolymerisation von Acryl- und/oder Methacrylgruppen-haltigen Monomeren in an sich bekannter Weise gefunden, indem man die Polymerisation in Gegenwart eines Puffers, ausgewählt aus der Gruppe bestehend aus Zitronensäure, Alkalimetallzitraten, Erdalkalimetallzitraten und Ammoniumzitraten und eines Dispergiermittels durchführt, wobei man einen Teil des Dispergiermittels erst bei fortgeschrittener Polymerisation zugibt und als Dispergiermittel ein Copolymerisat, erhältlich aus Methacrylsäure und einem C₁-C₄-Alkylester der Methacrylsäure, einsetzt.

Des weiteren wurde die Verwendung eines Puffers und eines Dispergiermittels zur Reduzierung des Wandbelages in Reaktionsbehältern bei der Suspensionspolymerisation von Acryl- und/oder Methacrylgruppen-haltigen Monomeren gefunden.

Als Acryl- und/oder Methacrylgruppen-haltigen Monomere setzt man bevorzugt C₁-C₁₈-Alkylester der Acrylsäure wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylacrylat, bevorzugt Methylacrylat, n-Butylacrylat und 2-Ethylhexylacrylat, sowie Mischungen dieser Monomeren, und/oder C₁-C₁₈-Alkylester der Methacrylsäure wie Methyl-, Ethyl-, n-Propyl-, i-Propyl, n-Butyl-, i-Butyl-, sek.-Butyl-, tert.-Butyl-, Pentyl-, Hexyl-, Heptyl-, Oktyl-, 2-Ethylhexyl-, Nonyl-, Decyl-, Lauryl- oder Stearylmethacrylat, bevorzugt Methylmethacrylat, sowie Mischungen dieser Monomeren ein.

Als besonders vorteilhaft haben sich nach den bisherigen Beobachtungen Polymerisate aus 80 bis 99 Gew.-% Methylmethacrylat und 1 bis 20 Gew.-% Methylacrylat erwiesen.

Als Puffer verwendet man erfindungsgemäß Zitronensäure und deren wasserlösliche Salze, bevorzugt Alkalimetall- und Erdalkalimetallzitrate sowie Ammoniumzitrate. Beispielhaft seien genannt: Lithium-, Natrium-, Kaliumdihydrogenzitrat, Dilithium-, Dinatrium-, Dikalium-, Diammonium-, Magnesium-, Calciumhydrogenzitrat, Trilithium-, Trinatrium-, Trikalium-, Triammoniumzitrat, Trimagnesium- und Tricalciumdizitrat.

Vorzugsweise setzt man eine Mischung von Zitronensäure und einem der oben genannten Salze ein, wobei eine Mischung aus Zitronensäure und einem Trialkalimetallzitrat, besonders bevorzugt Trinatriumzitrat, bevorzugt wird.

Die Menge an Puffer liegt im allgemeinen im Bereich von 0,001 bis 2 Gew.-%, bevorzugt von 0,001 bis 1 Gew.-%, besonders bevorzugt von 0,002 bis 0,1 Gew.-%. Bei einer Mischung aus Zitronensäure und eines ihrer Salze wählt man das Molverhältnis von Zitrat zu Zitronensäure - je nach gewünschtem pH-Wert - im allgemeinen im Bereich von 100:1 bis 1:1.

Die Polymerisation führt man erfindungsgemäß in Gegenwart von bis zu 5, bevorzugt von 0,001 bis 1, besonders bevorzugt von 0,01 bis 0,5 Gew.-%, bezogen auf das in der Reaktionsmischung vorhandene Wasser, Dispergiermitteln durch.

Als Dispergiermittel setzt man erfindungsgemäß ein Copolymerisat, erhältlich aus Methacrylsäure und einem C₁-C₄-Alkylester der Methacrylsäure wie Methyl-, Ethyl-, n-, i-Propyl, n-, i-, sek.- oder tert.-Butylmethacrylat, vorzugsweise Methylmethacrylat, ein.

Bevorzugt wird als Dispergiermittel ein Copolymerisat, erhältlich aus 50 bis 90 Gew.-% Methacrylsäure und 10 bis 50 Gew.-% Methylmethacrylat und/oder ein Alkalimetallsalz davon eingesetzt.

Dispergiermittel auf der Basis von Polyvinylalkohol oder Polyacrylsäure führen nach den bisherigen Beobachtungen zu keiner Reduzierung des Wandbelages.

Diese Copolymerisate kann man als (Poly-)Säure oder als Alkalimetall- oder Ammoniumsalze einsetzen, wobei die Alkalimetallsalze bevorzugt sind. Insbesondere eignen sich nach den bisherigen Beobachtungen Polymerisate aus 60 bis 70 Gew.-% Methacrylsäure und 30 bis 40 Gew.-% Methylmethacrylat, deren freie Carboxylgruppen mit Natronlauge neutralisiert wurden.

Erfindungsgemäß setzt man einen Teil des Dispergiermittels erst bei fortgeschrittener Polymerisation zu. Vorzugsweise verfährt man dabei so, daß man 5 bis 30, bevorzugt von 10 bis 20 Gew.-% des Dispergiermittels erst bei Monomerumsätzen im Bereich von 20 bis 80, bevorzugt von 30 bis 70 %, dem Reaktionsgemisch zusetzt. Unter Monomerumsatz ist hierbei die zu Polymer umgesetzte Menge des am schnellsten reagierenden Monomeren gemeint (in der Regel Methylmethacrylat).

Ansonsten nimmt man üblicherweise die Polymerisation in an sich bekannter Weise nach der Methodik der Suspensionspolymerisation vor. Dazu legt man im allgemeinen die Wasser- und Monomerphase unter Zusatz von Dispergiermittel und Puffer vor.

Für die Verbesserung der Verarbeitungseigenschaften können Thermostabilisatoren, z.B. sterisch gehinderte Phenole und Gleitmittel, z.B. Stearinsäure zugegeben werden.

In der Monomerphase befinden sich üblicherweise Molmassenregler sowie mindestens ein Initiator.

Durch mehrmaliges Aufpressen eines Inertgases wie Stickstoff und jeweils anschließendes Entspannen wird in der Regel der Reaktionsansatz inertisiert. Nach erneutem Aufpressen von Inertgas dispergiert man im allgeinen zunächst in der Kälte die Monomerphase durch Rühren in der Wasserphase und erhitzt dann auf die Polymerisationstemperatur, die üblicherweise im Bereich von 80 bis 150°C liegt. Der Druck im Kessel liegt üblicherweise zwischen 0,1 bis 1 MPa. Nach einer Reaktionszeit von 10 Stunden ist die Polymerisation in der Regel abgeschlossen.

Das Molekulargewicht kann man durch geeignete Kettenüberträger, beispielsweise Mercaptane, oder durch eine geeignete Temperaturführung regulieren. Im allgemeinen wählt man Molekulargewichte im Bereich von 50.000 bis 300.000, bevorzugt von 80.000 bis 200.000 g/mol (Gewichtsmittelwert des Molekulargewichtes).

Als Polymerisationsinitiatoren, die man in der Regel der Monomerphase zusetzt, verwendet man im allgemeinen übliche Radikalstarter wie Peroxide und Azoverbindungen, wobei man bevorzugt solche auswählt, deren Zerfallstemperaturen, d.h. Temperaturen, bei denen nach einer Stunde die Hälfte des Initiators zerfallen ist, unterhalb von 150°C liegen. Unter Umständen kann es dabei von Vorteil sein, auch ein Gemisch verschiedener Initiatoren einzusetzen. Die Einsatzmenge liegt in der Regel im Bereich von 0,1 bis 5 Gew.-%, bezogen auf die Gesamtmenge an Monomeren.

Als Peroxid-Initiatoren eignen sich beispielsweise Peroxidicarbonate, Peroxiester, Diacylperoxide, Monoperoxidcarbonate, Perketale und Dialkylperoxide. Nach den bisherigen Beobachtungen besonders geeignet sind Dilaurylperoxid, t-Butyl-per-2-ethylhexanoat, t-Butyl-per-3,5,5-trimethylhexanoat, 2,2-Bis(t-butylperoxi)butan, 1,1Bis(t-Butylperoxi)cyclohexan und Dibenzoylperoxid.

Als Azoverbindungen kann man Azobisisobuttersäurenitril oder Azobis(2,4-dimethyl)valeronitril einsetzen.

Die gesamte Initiatormenge liegt vorzugsweise zwischen 0,02 bis 0,5 Gew.-%, bezogen auf das Polymerisat.

Die Suspensionspolymerisate können übliche Zusatzstoffe und Verarbeitungshilfsmittel enthalten. Deren Anteil beträgt in der Regel bis zu 5, vorzugsweise bis zu 2 Gew.-%, bezogen auf das Gesamtgewicht der Suspensionspolymerisate.

Übliche Zusatzstoffe sind beispielsweise Stabilisatoren und Oxidationsverzögerer, Mittel gegen Wärmezersetzung, Gleit- und Entformungsmittel, Farbstoffe, Pigmente, Weichmacher, Antistatika und Flammschutzmittel.

Oxidationsverzögerer und Wärmestabilisatoren, die den thermoplastischen Massen gemäß der Erfindung zugesetzt werden können, sind z.B. Halogenide ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Weiterhin kann man Zinkfluorid und Zinkchlorid verwenden. Ferner kann man sterisch gehinderte Phenole, Hydrochinone, substituierte Vertreter dieser Gruppe und Mischungen dieser Verbindungen, vorzugsweise in Konzentrationen bis zu 1 Gew.-%, bezogen auf das Gewicht der Mischung, einsetzen.

Gleit- und Entformungsmittel, die man in der Regel bis zu 1 Gew.-% der thermoplastischen Masse zusetzen kann, sind beispielsweise Stearinsäure, Stearylalkohol, Stearinsäurealkylester und -amide sowie Ester des Pentaerathrits mit langkettigen Fettsäuren. Geeignete Farbstoffe können die üblichen organischen Farbstoffe, organische Pigmente und Lacke sowie übliche anorganische Pigmente wie Titandioxid, Cadmiumsulfid sein. Als Weichmacher seien Dioctylphthalat, Dibenzylphthalat und Butylbenzylphthalat genannt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureamide, Phosphinsäureamide, Tris-(aziridinyl)-phosphinoxid oder Tetrakis- (hydroxymethyl)-phosphoniumchlorid.

Weitere Ausführungen zur Suspensionspolymerisation von Acryl- und Methacrylverbindungen sind beispielsweise im Kunststoff-Handbuch, Band IX, "Polymethacrylate", Carl-Hauser-Verlag, München, 1975, S. 15ff, 31ff, beschrieben.

Das erfindungsgemäße Verfahren hat gegenüber Verfahren aus dem Stand der Technik den Vorteil, daß der Belag an Reaktionsbehälterwänden, insbesondere bei emaillierten Edelstahlbehältern, die mit dem Reaktionsgemisch in Berührung kommen, fast vollständig unterdrückt werden kann.

### Beispiele

### Beispiele 1 bis 7

In einem emailliertem Edelstahl-Behälter (V2A-Stahl) von 15 l Inhalt wurde eine Mischung aus 6720 g Wasser, 5544 g Methylmethacrylat, 56 g Methacrylat, 13,6 g n-Dodecylmercaptan, 2,63 g t-Butylperethylhexylhexanoat, 2,3 g t-Butyl-per-3,5,5-trimethylhexanoat, 1,36 g 2,2-Bis-(t-butylperoxi)butan (als 50 gew.-%ige Lösung in einem C₆-C₈-Alkan-Gemisch ("leichtsiedender Petrolether")) sowie der entsprechenden in folgender Tabelle wiedergegebenen Mengen an Dispergator und Puffer zunächst bei Raumtemperatur mit Stickstoff inertisiert und anschließend unter Rühren auf 125°C erhitzt und dann 3 h bei dieser Temperatur belassen. Nach dem abschließenden Abkühlen auf Raumtemperatur wurde dann das Polymerisat durch Abfiltrieren und Trocknen gewonnen.

Bei den Versuchen 2 und 4 bis 6 wurde ein Teil des Dispergiermittel erst nach 1,5 h Reaktionszeit (Monomerumsatz von Methylmethacrylat (MMA) 50 Gew.-%) zu dem Reaktionsgemisch zugegeben.

Aus der Differenz zwischen theoretischer und tatsächlicher Ausbeute wurde der Polymerbelag (Mittelwert aus 3 Versuchen; Abweichungen ± 10 %) an der Reaktorwand ermittelt.

**Tabelle**

| Nr. | Dispergator [g] | Nachdosage [%] | Puffer [g] | Belag [g] |
|---|---|---|---|---|
| erfindungsgemäß | | | | |
| 1 | 42 MAS/MMA¹ | 10 | 28 Zitrat² | 30 |
| 2 | 42 MAS/MMA¹ | 20 | 28 Zitrat² | 10 |

| zum Vergleich | | | | |
|---|---|---|---|---|
| 3 | 42 MAS/MMA¹ | -- | 28 Phosphat³ | 430 |
| 4 | 42 MAS/MMA¹ | 10 | 28 Phosphat³ | 420 |
| 5 | 42 MAS/MMA¹ | -- | 28 Zitrat² | 390 |
| 6 | 102 PVOH⁴ | 10 | 28 Zitrat² | 510 |
| 7 | 98 Polyacryls.⁵ | 10 | 28 Zitrat² | 630 |

| | | | | |
|---|---|---|---|---|
| ¹) Copolymerisat aus 64 Gew.-% Methacrylsäure und 36 Gew.-% Methylmethacrylat in Form einer 1,6 gew.-%igen wäßrigen Lösung (mit NaOH auf pH 7 eingestellt) | | | | |
| ²) Trinatriumzitrat | | | | |
| ³) Gemisch aus (a) Na₂HPO₄ · 12H₂O und (b) NaH₂PO₄ · 2H₂O ((a):(b) = 2,73:1) | | | | |
| ⁴) Teilverseiftes Polyvinylacetat (Mowiol^{®} 4088 der Fa. Hoechst; Viskosität einer 4 gew.-%igen Lösung in Wasser bei 20°C: 40 mPa·sec; Hydrolysegrad: 88 mol-%) | | | | |
| ⁵) Polyacrylsäure (Acrysol^{®} A3 der Fa. Rohm and Haas; 20 gew.-%ig in Wasser) | | | | |

## Patentansprüche

1. Verfahren zur Reduzierung des Wandbelages in Reaktionsbehältern bei der Suspensionspolymerisation von Acryl- und/oder Methacrylgruppen-haltigen Monomeren, dadurch gekennzeichnet, daß man die Polymerisation in Gegenwart eines Puffers, ausgewählt aus der Gruppe bestehend aus Zitronensäure, Alkalimetallzitraten, Erdalkalimetallzitraten und Ammoniumzitraten, und eines Dispergiermittels durchführt, wobei man einen Teil des Dispergiermittels erst bei fortgeschrittener Polymerisation zugibt, und als Dispergiermittel ein Copolymerisat, erhältlich aus Methacrylsäure und einem C₁-C₄-Alkylester der Methacrylsäure, einsetzt.

2. Verfahren nach Anspruch 1, dadurch gekennzeichnet, daß man als Dispergiermittel ein Copolymerisat, erhältlich aus 50 bis 90 Gew.-% Methacrylsäure und 10 bis 50 Gew.-% Methylmethacrylat und/oder ein Alkalimetallsalz davon einsetzt.

3. Verfahren nach den Ansprüchen 1 bis 2, dadurch gekennzeichnet, daß man 5 bis 30 Gew.-% des Dispergiermittels bei einem Monomerumsatz im Bereich von 20 bis 80 % des am schnellsten reagierenden Monomeren zusetzt.

4. Verfahren nach den Ansprüchen 1 bis 3, dadurch gekennzeichnet, daß man als Reaktionsbehälter einen emaillierten Edelstahlbehälter verwendet.

5. Verwendung eines Puffers und eines Dispergiermittels gemäß Anspruch 1 zur Reduzierung des Wandbelags in Reaktionsbehältern bei der Suspensionspolymerisation in Acryl- und/oder Methacryl-haltigen Monomeren.

## Claims

1. A process for reducing the wall coating in reaction containers in the suspension polymerization of monomers containing acrylate and/or methacrylate groups, wherein the polymerization is carried out in the presence of a buffer selected from the group consisting of citric acid, alkali metal citrates, alkaline earth metal citrates and ammonium citrates, and of a dispersant, a part of the dispersant being added only when the polymerization has progressed, and a copolymer obtainable from methacrylic acid and a C₁-C₄-alkyl ester of methacrylic acid being used as the dispersant.

2. A process as claimed in claim 1, wherein the dispersant used is a copolymer obtainable from 50-90 % by weight of methacrylic acid and 10-50 % by weight of methyl methacrylate and/ or an alkali metal salt thereof.

3. A process as claimed in claim 1 or 2, wherein from 5 to 30 % by weight of the dispersant are added at a monomer conversion of from 20 to 80 % of the most rapidly reacting monomer.

4. A process as claimed in any of claims 1 to 3, wherein the reaction container used is an enameled stainless steel container.

5. The use of a buffer and of a dispersant as claimed in claim 1 for reducing the wall coating in rection containers in the suspension polymerization of monomers containing acrylate and/or methacrylate groups.

## Revendications

1. Procédé pour la réduction du dépôt sur les parois dans des récipients de réaction lors de la polymérisation en suspension de monomères de type acrylique et/ou méthacrylique, caractérisé en ce qu'on effectue la polymérisation en présence d'un tampon choisi parmi le groupe constitué par l'acide citrique, des citrates de métaux alcalins, des citrates de métaux alcalino-terreux et des citrates d'ammonium, ainsi que d'un agent de mise en dispersion, dans lequel on n'ajoute une partie de l'agent de mise en dispersion que lorsque la polymérisation a progressé et on met en oeuvre comme agent de mise en dispersion un copolymère obtenu à partir d'acide méthacrylique et d'un ester alkylique en C₁-C₄ de l'acide méthacrylique.

2. Procédé selon la revendication 1, caractérisé en ce qu'on met en oeuvre, comme agent de mise en dispersion, un copolymère qui contient, à concurrence de 50 à 90% en poids, de l'acide méthacrylique et, à concurrence de 10 à 50% en poids, du méthacrylate de méthyle et/ou un sel de métal alcalin.

3. Procédé selon les revendications 1 à 2, caractérisé en ce qu'on ajoute de 5 à 30% en poids de l'agent de mise en dispersion lorsqu'on a atteint une conversion de monomère dans le domaine de 20 à 80% du monomère qui réagit le plus rapidement.

4. Procédé selon les revendications 1 à 3, caractérisé en ce qu'on utilise comme récipient de réaction un récipient en acier spécial émaillé.

5. Utilisation d'un tampon et d'un agent de mise en dispersion selon la revendication 1, pour la réduction du dépôt sur les parois de récipients de réaction lors de la polymérisation en suspension de monomères de type acrylique et/ou méthacrylique.
